(19)

Europäisches Patentamt
European Patent Office
Office européen des brevets

(11) **EP 2 544 028 A1**

(12) **EUROPEAN PATENT APPLICATION**
published in accordance with Art. 153(4) EPC

(43) Date of publication:
**09.01.2013 Bulletin 2013/02**

(51) Int Cl.:
*G02B 1/10* [(2006.01)]  *B32B 7/02* [(2006.01)]
*B32B 27/18* [(2006.01)]  *G02B 1/11* [(2006.01)]
*G02F 1/1335* [(2006.01)]

(21) Application number: **11750506.5**

(22) Date of filing: **22.02.2011**

(86) International application number:
**PCT/JP2011/053773**

(87) International publication number:
**WO 2011/108394 (09.09.2011 Gazette 2011/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2010 JP 2010049227**

(71) Applicant: **Daicel Corporation
Osaka-shi, Osaka 530-0001 (JP)**

(72) Inventors:
• **USHIDA Hiroaki
Amagasaki-shi
Hyogo 661-0964 (JP)**
• **HAYASHI Masaki
Amagasaki-shi
Hyogo 661-0964 (JP)**

(74) Representative: **Grünecker, Kinkeldey,
Stockmair & Schwanhäusser
Leopoldstrasse 4
80802 München (DE)**

(54) **OPTICAL FILM AND METHOD FOR PRODUCING THE SAME**

(57)  A hardcoat layer is a cured layer comprising a curable resin-precursor, a thermoplastic resin, and a fine particle having an average primary particle size of 1 to 100 nm, and the hardcoat layer is formed on at least one side of a transparent film. The thermoplastic resin may be a thermoplastic resin (particularly, a cellulose derivative) nonreactive to the curable resin-precursor. The ratio of the metal oxide fine particle is about 0.5 to 4 parts by weight relative to 100 parts by weight of the curable resin-precursor. The metal oxide fine particle may comprise at least one fine particle selected from the group consisting of antimony tin oxide, tin oxide, and zinc oxide. The curable resin-precursor may comprise a tetra- or more-functional precursor. The optical film of the present invention has excellent anti-glareness or anti-Newton-ring property and also has excellent abrasion resistance and mechanical properties.

Fig. 1
200μm

EP 2 544 028 A1

## Description

TECHNICAL FIELD

The present invention relates to an optical film used in a display for a display screen of an electrical or electronic apparatus or a precision instrument, and a process for producing the same.

BACKGROUND ART

In recent years, remarkable progress as a display apparatus has been made in liquid crystal displays (LCD) for television (TV) application or movie display application, and the liquid crystal display has become rapidly popular. For example, the development of a liquid crystal material having a high-speed responsiveness or the improvement of a drive system such as overdrive has overcome weak points (poor movie display) of a conventional liquid crystal, and the production engineering innovation supporting the increase in display size of the display has progressed.

The display surfaces of these displays are usually subjected to a surface treatment for inhibiting reflection of an ambient light (sun light or light from a light source around the display) on a surface in order to use the displays for an application requiring a high image quality (e.g., a television and a monitor) and an application in which the displays are used in open air under a strong ambient light (e.g., a video camera). One of the means for inhibiting reflection of the ambient light is an anti-glare treatment. For example, a surface of a liquid crystal display is usually subjected to the anti-glare treatment. The anti-glare treatment forms a finely uneven structure on the surface of the display so as to scatter a light reflected from the surface and to blur a reflected image on the surface. The LCD is usually provided with an anti-glare film treated in this manner.

Meanwhile, a recent progress in an electronic display as man machine interface has resulted in popularization of an interactive input system. Among others, an apparatus in which a touch panel (a digitizer) is united with a display screen is widely used. Moreover, since use of the touchpanel in combination wi th a lightweight and thin display (e.g., a liquid crystal display) dispenses with any keyboard and exhibits the features of the display, the touch panel is increasingly used for mobile devices. According to the position detection method, the touch panel can be classified into an optical system, an ultrasonic-wave system, a capacitive system, a resistive system, and other systems. Among them, the resistive system is now rapidly popularized due to a simple structure and an excellent cost performance ratio thereof.

The resistive touch panel is an electric part
comprising a pair of films or sheets, each having a transparent electrode, held at regular intervals, and the two electrodes faces each other. The operation system of the touch panel is as follows : a first transparent electrode is fixed, and a second transparent electrode is pressed and deflected (or bent) with a pen (or a stylus) or a finger from a viewing side to come in contact with the fixed first transparent electrode and guide an electrical current, so that a detector circuit detects a position and a predetermined input is applied. According to such an operation system of the touch panel, in pressing the electrode with a pen or a finger, a rainbow interference pattern (an interference color or an interference fringe, what is called "Newton rings" (or "Newton's rings")) sometimes appears around a pointing (or touching) member (such as a finger or a pen), and the interference pattern deteriorates a visibility of a screen. Specifically, when the interval between two transparent electrodes facing each other becomes almost the same length as a wavelength of the visible light (e.g., about 0.5 $\mu$m) due to contact with each other or deflection for contact, the interference of reflected light is caused due to a space (or gap) between the two transparent electrodes to generate Newton rings. The generation of the Newton rings is an inevitable phenomenon on the basis of the principle of the resistive touch panel. As a measure to reduce Newton rings in the touch panel, a treatment for forming an uneven surface structure on a support film which forms a transparent electrode has been used.

In this manner, the LCD or the touchpanel is provided with an optical film (or a light-scattering film) having an uneven surface structure. The optical film is usually obtained by applying a mixture containing a fine particle (such as a resin fine particle or a silica fine particle) and a binder resin or a curable resin on a substrate to form a finely uneven structure on a surface of the substrate. In recent years, although a high definition display apparatus having a fine pixel size has been developed in the LCD or the like, sparkling of transmitted images (or pictures), blur of characters, or others easily occurs in the display apparatus. Thus the control of the uneven surface structure is being attempted by reducing the size of a fine particle or by using a fine particle having a narrow and sharp particle size distribution.

For example, for a plasma display panel (PDP) being now in widespread use as well as the LCD, as an anti-glare film which allows an excellent transfer imaging to be displayed and has an excellent anti-glareness, Japanese Patent Application Laid-Open Publication No. 2009-265143 (JP-2009-265143A, Patent Document 1) discloses an anti-glare film which comprises a transparent film and a hardcoat layer formed on the transparent film, wherein the hardcoat layer includes (a) a silica fine particle with a primary fine particle size of 40 to 200 nm, (b) a silica fine particle with a primary fine particle size of 1 to 30 nm and a binder, and also includes an aggregate (or cohesion) structure of the silica fine particle, the center line average roughness Ra of the hardcoat layer side surface of the anti-glare film is 0.05 to 0.3

μm, the recessed and projection cycle λa is 40 to 200 μm, and the haze value of the anti-glare film is 0.1 to 3.0%. This document discloses that in Examples the silica fine particle content is 0.05 to 30% by weight (particularly, 0.2 to 25% by weight) in the film and that the silica fine particle is mixed in a ratio of 1.5 to 10 parts by weight relative to 100 parts by weight of a hardcoat material. Moreover, as a method for forming the aggregate structure of the silica fine particle, a method using a flocculating agent (e.g., an alkylacetoacetate aluminum diisopropylate) is described in this document.

The anti-glare sheet, however, cannot relaxa stress applied from outside, because the hardcoat layer is formed from only a curable resin. Thus the anti-glare sheet easily cracks, and just a slight bending of the sheet causes slits running along the bending line. In particular, when the sheet is used for an application undergoing repeated hitting (such as an upper transparent electrode of the touch panel), the sheet is insufficient in durability. Moreover, since the anti-glare sheet has insufficient optical characteristics and alow anti-glareness, not only sparkling is observed but also a transmitted image is displayed unclearly. Further, a flocculating agent necessary for the aggregation of a large amount of the silica fine particle causes bleeding out. Furthermore, since the silica fine particle has an insufficient antistatic property, in Examples an antistatic layer containing an ITO fine particle is formed in addition to the hardcoat layer.

RELATED ART DOCUMENTS

PATENT DOCUMENTS

Patent Document 1: JP-2009-265143A (Claims, Paragraph [0028], and Examples)

SUMMARY OF THE INVENTION

PROBLEMS TO BE SOLVED BY THE INVENTION

It is therefore an object of the present invention to provide an optical film having excellent anti-glareness (or anti-glare property) or anti-Newton-ring property as well as excellent abrasion resistance and mechanical properties, and a process for producing the sheet.

Another object of the present invention is to provide an optical film having an antistatic property without requiring an antistatic treatment or an antistatic layer, and a process for producing the sheet.

It is still another object of the present invention to provide an optical film having a moderate flexibility and a high hitting durability in a touch panel or the like, and a process for producing the sheet.

It is a further object of the present invention to provide an optical film from which a flocculating agent or the like is inhibited from bleeding out, and a process for producing the sheet.

MEANS TO SOLVE THE PROBLEMS

The inventors of the present invention made extensive studies and finally found that the formation of a hardcoat layer from a curable resin composition containing a thermoplastic resin and a nanometer-sized metal oxide fine particle on at least one side of a transparent film improves the anti-glareness or anti-Newton-ring property of the resulting optical filmas well as improves the abrasion resistance and mechanical properties thereof. The present invention was accomplished based on the above findings.

That is, the optical film of the present invention comprises a transparent film and a hardcoat layer formed on at least one side of the transparent film, and the hardcoat layer is a cured layer comprising a curable resin-precursor, a thermoplastic resin, and a metal oxide fine particle having an average primary particle size of 1 to 100 nm. The thermoplastic resin may be nonreactive to the curable resin-precursor (for example, a nonreactive thermoplastic resin such as a cellulose derivative). The ratio of the metal oxide fine particle is about 0.5 to 4 parts by weight relative to 100 parts by weight of the curable resin-precursor. The metal oxide fine particle may comprise at least one fine particle selected from the group consisting of antimony tin oxide, antimony oxide, tinoxide, and zinc oxide. The curable resin-precursor may comprise a tetra- or more-functional precursor. The hardcoat layer may have an uneven surface structure having an arithmetic average roughness (Ra) of 0.03 to 0.15 μm and an average spacing of concavo-convexes (Sm) of 50 to 300 μm. The hardcoat layer is substantially free from a flocculating agent. The optical film of the present invention may have a haze of about 0.3 to 4%. The optical film of the present invention may further comprise a low-refraction layer (or a low-refraction-index layer) formed on the hardcoat layer.

The present invention also include a process for producing the optical film, which comprises applying a coating composition (or a liquid coating composition) on at least one side of a transparent film to form a coating layer, the coating composition comprising a thermoplastic resin, a curable resin-precursor, and a metal oxide fine particle having an average primary particle size of 1 to 100 nm; drying the coating layer; and then curing the curable resin-precursor of the dried coating layer by irradiating the dried layer with an active energy ray. In this process, as the coating composition, a coating composition substantially free from a flocculating agent may be used.

Throughout this description, the meaning of the term "metal oxide" does not include a silicon oxide (such as silica).

EFFECTS OF THE INVENTION

According to the present invention, since a hardcoat layer which comprises a curable resin composition containing a thermoplastic resin and a nanometer-sized metal oxide fine particle is formed on at least one side of a transparent film, the metal oxide fine particle provides a nucleus for an uneven structure, and the resulting optical film has an improved anti-glareness or anti-Newton-ring property as well as improved abrasion resistance and mechanical properties. Moreover, due to the metal oxide fine particle, an optical film having an antistatic property can be obtained without requiring an antistatic treatment or an antistatic layer. Further, since the optical film contains the thermoplastic resin in addition to a cured resin, the film has a moderate flexibility and an improved hitting durability in a touch panel or the like. Furthermore, since the metal oxide fine particle can form an uneven structure, which expresses excellent optical characteristics, without addition of a flocculating agent due to easy aggregation of the metal oxide fine particle compared with aggregation of silica, an optical film from which a flocculating agent or the like is inhibited from bleeding out can be obtained.

BRIEF DESCRIPTION OF DRAWINGS

[Fig. 1] Fig. 1 is a laser-microscopic photograph of a surface of an optical film obtained in Example 1.
[Fig. 2] Fig. 2 is a laser-microscopic photograph of a surface of an optical film obtained in Example 4.

DESCRIPTION OF EMBODIMENTS

[Hardcoat layer]

The optical film of the present invention comprises a hardcoat layer formed on at least one side (usually one side) of a transparent film. The hardcoat layer is a cured layer comprising a curable resin-precursor, a thermoplastic resin, and a metal oxide fine particle having an average primary particle size (or diameter) of 1 to 100 nm.

(Curable resin-precursor)

As the curable resin-precursor, there may be used various curable compounds having a reactive functional group to heat or an actinic ray (or active energy ray) (e.g., an ultraviolet ray, and an electron beam) and being capable of forming a resin (particularly a cured or a crosslinked resin) by curing or crosslinking with heat or an actinic ray. For example, as the resin-precursor, there may be mentioned a thermosetting compound or resin [a low molecular weight compound having an epoxy group, a polymerizable group, an isocyanate group, an alkoxysilyl group, a silanol group, or others (e.g., an epoxy-series resin, an unsaturated polyester-series resin, a urethane-series resin, and a silicone-series resin)], and a photo-curable compound that is curable with an actinic ray (such as ultraviolet ray) (e.g., an ultraviolet-curable compound such as a photo-curable monomer or oligomer). The photo-curable compound may be an EB (electron beam)-curable compound, or others. Incidentally, a photo-curable compound such as a photo-curable monomer, a photo-curable oligomer, or a photo-curable resin which may have a low molecular weight is sometimes simply referred to as "photo-curable resin".

The photo-curable compound may include, for example, a monomer and an oligomer (or a resin, particularly a resin having a low molecular weight). For example, the monomer can be classified into the following two groups: a monofunctional monomer, which has one polymerizable group, and a polyfunctional monomer, which has at least two polymerizable groups.

The monofunctional monomer may include, for example, a (meth)acrylic monomer (e.g., a (meth)acrylate), a vinyl-series monomer (e.g., vinylpyrrolidone), and a (meth)acrylate having a crosslinked cyclic hydrocarbon group (e.g., isobornyl (meth)acrylate and adamantyl (meth)acrylate).

The polyfunctional monomer may include a polyfunctional monomer having about 2 to 8 polymerizable groups. The difunctional monomer may include, for example, an alkylene glycol di (meth) acrylate such as ethylene glycol di (meth)acrylate, propylene glycol di(meth)acrylate, butanediol di(meth)acrylate, neopentyl glycol di(meth)acrylate, or hexanediol di(meth)acrylate; a (poly)oxyalkylene glycol di(meth)acrylate such as diethylene glycol di(meth)acrylate, dipropylene glycol di(meth)acrylate, or a polyoxytetramethylene glycol di(meth)acrylate; and a di(meth)acrylate having a crosslinked cyclic hydrocarbon group (e.g., tricyclodecane dimethanol di(meth)acrylate and adamantane di(meth)acrylate).

As the tri- to octa-functional monomer, there may be mentioned, for example, glycerin tri(meth)acrylate, trimethylolpropane tri(meth)acrylate, trimethylolethane tri(meth)acrylate, pentaerythritol tri(meth)acrylate, pentaerythritol tetra(meth)acrylate, dipentaerythritol penta(meth)acrylate, and dipentaerythritol hexa(meth)acrylate.

Examples of the oligomer or resin may include a (meth) acrylate of an adduct of bisphenol A with an alkylene oxide, an epoxy (meth)acrylate (e.g., a bisphenol A-based epoxy (meth)acrylate and a novolak-based epoxy (meth) acrylate), a polyester (meth)acrylate (e.g., an aliphatic polyester-based (meth)acrylate and an aromatic polyester-based (meth)acrylate), a (poly)urethane (meth)acrylate (e.g., a polyester-based urethane (meth)acrylate and a polyether-based urethane (meth)acrylate), a silicone (meth)acrylate, and others. These (meth)acrylate oligomers or resins may contain a copolymerizable monomer unit as exemplified in the paragraph of the (meth) acrylic resin in the polymer component. These photo-curable compounds may be used alone or in combination.

Further, the curable resin-precursor may contain a fluorine atom or an inorganic particle in order to improve the strength of the hardcoat layer or other purposes. The precursor containing a fluorine atom (fluorine-containing curable compound) may include fluorides of the above-mentioned monomer and oligomer, for example, a fluoroalkyl (meth) acrylate [e.g., perfluorooctylethyl (meth)acrylate and trifluoroethyl (meth)acrylate], a fluoro(poly)oxyalkylene glycol di (meth)acrylate [e.g., fluoroethylene glycol di(meth)acrylate and fluoropropylene glycol di(meth)acrylate], and a fluorine-containing epoxy resin, a fluorine-containing urethane-series resin. The precursor containing an inorganic particle may include, for example, an inorganic particle having a polymerizable group on a surface thereof (e.g. , a silica particle which has a surface modified with a silane coupling agent having a polymerizable group). As a nano-sized silica particle (or silica nanoparticle) having a polymerizable group on a surface thereof, for example, a polyfunctional hybrid UV-curing agent (Z7501) is commercially available from JSR Corporation.

The preferred curable resin-precursor includes a photo-curable compound curable in a short time, for example, an ultraviolet-curable compound (e.g., a monomer, an oligomer, and a resin which may have a low molecular weight) and an EB-curable compound. In particular, a resin-precursor having a practical advantage is an ultraviolet-curable resin. Further, in order to improve the abrasion resistance, the photo-curable resin preferably comprises a photo-curable compound having two or more functional groups (preferably about 2 to 10 functional groups, and more preferably about 3 to 8 functional groups), particularly, a polyfunctional (meth) acrylate [for example, a tri- or more-functional (particularly, tetra- to octa-functional) (meth)acrylate (e.g., an ester of a polyhydric (penta- to hepta-hydric) alcohol with (meth)acrylic acid, such as dipentaerythritol hexa(meth)acrylate)].

The number-average molecular weight of the curable resin-precursor is, allowing for compatibility to the after-mentioned thermoplastic resin, not more than about 5000 (e.g., about 300 to 2000), preferably not more than about 2000 (e.g., about 500 to 2000), and more preferably not more than about 1000 (e.g., about 600 to 1000).

The curable resin-precursor may contain a curing agent depending on the variety. For example, a thermosetting resin may contain a curing agent such as an amine or a polyvalent (or polyfunctional) carboxylic acid, and a photo-curable resin may contain a photopolymerization initiator. As the photopolymerization initiator, there may be exemplified a conventional component, e.g., an acetophenone, a propiophenone, a benzyl, a benzoin, a benzophenone, a thioxanthone, an acylphosphine oxide, and others. The amount of the curing agent (such as a photo curing agent) relative to 100 parts by weight of the curable resin-precursor is about 0.1 to 20 parts by weight, preferably about 0.5 to 10 parts by weight, and more preferably about 1 to 8 parts by weight (particularly about 1 to 5 parts by weight), and may be about 3 to 8 parts by weight.

Further, the curable resin-precursor may contain a curing accelerator. For example, the photo-curable resin may contain a photo-curing accelerator, e.g., a tertiary amine (such as a dialkylaminobenzoic ester) and a phosphine-series photopolymerization accelerator.

(Thermoplastic resin)

The thermoplastic resin is added to the hardcoat layer in order to improve the mechanical properties such as flexibility. The thermoplastic resin preferably includes a resin nonreactive to the curable resin-precursor (a resin free from a reactive group participating in a curing reaction).

As the thermoplastic resin, for example, there may be exemplified a styrenic resin [e.g., a polystyrene, a copolymer of styrene and a (meth)acrylic monomer, an AS resin, and a styrene-butadiene copolymer], a (meth) acrylic resin [e.g., a poly(meth)acrylate such as a poly(methyl methacrylate), a methyl methacrylate-(meth)acrylic acid copolymer, a methyl methacrylate- (meth) acrylate copolymer, a methyl methacrylate-acrylate-(meth)acrylic acid copolymer, a (meth)acrylate-styrene copolymer (e.g., a MS resin), and a (meth)acrylic acid-methyl (meth)acrylate-isobornyl (meth)acrylate], an organic acid vinyl ester-series resin [e.g., an ethylene-vinyl acetate copolymer, a vinyl acetate-vinyl chloride copolymer, a vinyl acetate- (meth) acrylate copolymer, a poly(vinyl alcohol), an ethylene-vinyl alcohol copolymer, and a poly(vinyl acetal) resin], a vinyl ether-series resin [e.g., a poly(vinyl methyl ether), a poly(vinyl ethyl ether), a poly (vinyl propyl ether), and a poly (vinyl t-butyl ether)], a halogen-containing resin [e.g., a poly(vinyl chloride), a poly (vinylidene fluoride), a vinyl chloride-vinyl acetate copolymer, a vinyl chloride-(meth) acrylate copolymer, and a vinylidene chloride-(meth)acrylate copolymer], an olefinic resin [e.g., an olefinic homopolymer such as a polyethylene or a polypropylene, an ethylene-vinyl acetate copolymer, an ethylene-vinyl alcohol copolymer, an ethylene-(meth)acrylic acid copolymer, an ethylene-(meth)acrylate copolymer, and an alicyclic olefinic resin], a polycarbonate-series resin (e.g., a bisphenolA-based polycarbonate),a polyester-seriesresin [e.g., a poly ($C_{2-4}$alkylene arylate) such as a poly (ethylene terephthalate), a poly(butylene terephthalate), or a poly (ethylene naphthalate) and an amorphous polyester such as a poly($C_{2-4}$alkylene arylate)-series copolyester], a polyamide-series resin (e.g., an aliphatic polyamide such as a polyamide 46, a polyamide 6, a polyamide 66, a polyamide 610, a polyamide 612, a polyamide 11, or a polyamide 12), a thermoplastic polyurethane resin (e.g., a polyester-based urethane-series resin), a polysulfone-series resin (e.g., a polyether sulfone and a polysulfone), a polyphenylene ether-series resin (e.g., a polymer of 2,6-xylenol), a cellulose derivative (e.g., a cellulose ester), a silicone resin (e.g., a polydimethylsiloxane and a polymethylphenylsiloxane), a rubber or elastomer (e.g., a diene-series rubber such as a polybutadiene or a polyisoprene, a styrene-butadiene copolymer, an acrylonitrile-butadiene copolymer, an acrylic rubber, a urethane rubber, and a silicone rubber), and the like. These thermoplastic resins may be used alone or in combination.

Among these thermoplastic resins, a widely used one includes a styrene-series copolymer resin, a (meth)acrylic elastomer, an olefinic elastomer, an alicyclic olefinic elastomer, a polyester-series elastomer, a cellulose derivative, a silicone resin, and others. In view of excellent transparency and heat resistance as well as improved mechanical properties (such as flexibility), the cellulose derivative is preferred.

The cellulose derivative may include a cellulose ester, a cellulose ether, and a cellulose carbamate.

The cellulose ester may include, for example, an aliphatic organic acid ester of a cellulose (e.g., a cellulose $C_{2-6}$acylate such as a cellulose acetate (e.g., a cellulose diacetate and a cellulose triacetate), a cellulose propionate, a cellulose butyrate, a cellulose acetate propionate, or a cellulose acetate butyrate), an aromatic organic acid ester of a cellulose (e.g. a $C_{7-12}$aromatic carboxylic acid ester of a cellulose such as a cellulose phthalate or a cellulose benzoate), and an inorganic acid ester of a cellulose (e.g., a cellulose phosphate and a cellulose sulfate). The cellulose ester may be a mixed acid ester of a cellulose such as a cellulose acetate nitrate.

As the cellulose ether, for example, there may be mentioned a cyanoethylcellulose; a hydroxy$C_{2-4}$alkyl cellulose such as a hydroxyethyl cellulose or hydroxypropyl cellulose; a $C_{1-6}$alkyl cellulose such as a methyl cellulose or an ethyl cellulose; a carboxymethyl cellulose or a salt thereof, a benzyl cellulose, and an acetyl alkyl cellulose. The cellulose carbamate may include, for example, a cellulose phenylcarbamate.

These cellulose derivatives may be used alone or in combination. Among these cellulose derivatives, a cellulose ester, particularly, a cellulose $C_{2-6}$acylate (e.g., a cellulose diacetate, a cellulose triacetate, a cellulose propionate, a cellulose butyrate, a cellulose acetate propionate, and a cellulose acetate butyrate) is preferred. In particular, a cellulose $C_{2-4}$acylate such as a cellulose diacetate, a cellulose acetate propionate, or a cellulose acetate butyrate (particularly, a cellulose acetate$C_{3-4}$acylate such as a cellulose acetate propionate) is preferred in terms of easy preparation of a coating composition due to a high solubility in a solvent, easy viscosity adjustment of the coating composition by addition in small quantity, inhibition of fine particle aggregation in the coating composition, and an improved storage stability.

The ratio of the thermoplastic resin relative to 100 parts by weight of the curable resin-precursor is, for example, about 0.1 to 30 parts by weight, preferably about 0.1 to 20 parts by weight (e.g., about 0.3 to 15 parts by weight), and more preferably about 0.6 to 10 parts by weight (particularly, about 1 to 5 parts by weight). According to the present invention, the balance of the hardcoat property and the mechanical properties (such as shock absorption or cushion property) can be adjusted by adjusting the ratio of the thermoplastic resin. When the ratio of the thermoplastic resin is within the range, the hardcoat layer has well-balanced hardcoat property and mechanical properties.

(Metal oxide fine particle)

According to the present invention, an uneven structure having excellent optical characteristics can be formed on a surface of the hardcoat layer by adding a metal oxide fine particle to the hardcoat layer probably because the metal oxide fine particle provides a nucleus for a projection of the resin component. The metal oxide fine particle has excellent transparency and abrasion resistance. In addition, when a low-refraction layer is formed, the metal oxide fine particle can improve the adhesion of the hardcoat layer and the low-refraction layer. Further, since the metal oxide fine particle has an excellent conductivity, the metal oxide fine particle can impart conductivity to the film and inhibit sticking of dust on the film.

The metal oxide constituting the metal oxide fine particle may include, for example, a metal oxide of the Group 4A of the Periodic Table of Elements (e.g. , titanium oxide and zirconium oxide), a metal oxide of the Group 5A (e.g. , vanadium oxide), a metal oxide of the Group 6A (e.g., molybdenum oxide and tungstic oxide), a metal oxide of the Group 7A (e. g. , manganese oxide), a metal oxide of the Group 8 (e.g., nickel oxide and iron oxide), a metal oxide of the Group 1B (e.g., copper oxide), a metal oxide of the Group 2B (e.g., zinc oxide), a metal oxide of the Group 3B (e.g., aluminum oxide and indium oxide), a metal oxide of the Group 4B (e.g., tin oxide), and a metal oxide of the Group 5B (e.g., antimony oxide).

These metal oxide fine particles may be used alone or in combination. Among these metal oxide fine particles, for example, a metal oxide containing antimony, tin, or zinc [e.g., antimony trioxide, antimony tetroxide, antimony pentoxide, antimony tin oxide (antimony-doped tin oxide), tin oxide, and zinc oxide] is preferred. A fine particle comprising at least one member selected from the group consisting of antimony tin oxide, antimony oxide, tin oxide, and zinc oxide is particularly preferred.

The metal oxide fine particle may be in the form of a dispersion dispersed in a solvent. The solvent may include, for example, water, an alcohol (e.g., a lower alcohol such as methanol, ethanol, isopropanol, butanol, or cyclohexanol), a ketone (e.g., acetone, methyl ethyl ketone, methyl isobutylketone, and cyclohexanone), an ester (e.g. , methyl acetate, ethyl acetate, propyl acetate, butyl acetate, methyl formate, and ethyl formate), an ether (e.g., diethyl ether, dioxane, and tetrahydrofuran), an aliphatic hydrocarbon (e.g., hexane), an alicyclic hydrocarbon (e.g., cyclohexane), an aromatic hydrocarbon (e.g., benzene), a carbon halide (e.g., dichloromethane and dichloroethane), a cellosolve (e.g., methyl cellosolve, and ethyl cellosolve), a cellosolve acetate, and an amide (e. g. , dimethylformamide and dimethyhlacetamide) . These solvents may be used alone or in combination. Among these solvents, a lower alcohol such as ethanol or isopropanol [for example, a mixed solvent containing ethanol and isopropanol in a weight ratio (ethanol/isopropanol) of 90/10 to about 50/50 (particularly, about 80/20 to 60/40)] is widely used. The concentration of the metal oxide fine particle in the dispersion is, for example, about 0.1 to 50% by weight, preferably about 1 to 40% by weight, and more preferably about 5 to 30% by weight. The metal oxide fine particle may be surface-treatedbyaconventional surface treatment in order to disperse the metal oxide fine particle in the solvent.

The shape of the metal oxide fine particle is not particularly limited to a specific one. The shape of the fine particle may include a spherical form, an ellipsoidal form, a polygonal form (e.g., a polyangular-pyramid form, a cubic form, and a rectangular-prism form), a plate-like form, a rod-like form, an amorphous form, and others. In order to form a uniform uneven structure on the surface of the hardcoat layer, an isotropic form (e.g. , an almost spherical form) is preferred.

The average primary particle size (or diameter) of the metal oxide fine particle may be selected from the range of about 1 to 100 nm and is, for example, about 1 to 60 nm (e.g., about 1 to 50 nm), preferably about 2 to 30 nm, and more preferably about 3 to 15 nm (in particular, about 5 to 10 nm). Probably because a metal oxide fine particle having a primary fine particle size within the above-mentioned range moderately aggregates in the hardcoat layer to provide a nucleus, the particle can form an uneven structure on the surface of the hardcoat layer.

The ratio of the metal oxide fine particle relative to 100 parts by weight of the curable resin-precursor is, for example, about 0.1 to 10 parts by weight, preferably about 0.3 to 5 parts by weight, and about more preferably 0.5 to 4 parts by weight (particularly about 0.6 to 3 parts by weight). According to the present invention, even when the ratio of the fine particle is small (for example, even when the ratio of the fine particle relative to 100 parts by weight of the curable resin-precursor is not more than 4 parts by weight), the fine particle can form an uneven structure having excellent optical characteristics. In particular, the ratio of the fine particle relative to 100 parts by weight of the curable resin-precursor may be about 0.5 to 2 parts by weight (particularly about 0.6 to 1.5 parts by weight).

The ratio of the metal oxide fine particle relative to 100 parts by weight of the total amount of the curable resin-precursor and the thermoplastic resin may for example be about 0.1 to 20 parts by weight, preferably about 0.3 to 10 parts by weight, and more preferably about 0.5 to 5 parts by weight.

The metal oxide fine particle is widely used as a conductive (or electroconductive) material due to an excellent conductivity thereof, while the metal oxide fine particle colors a transparent resin when mixed. Thus, the metal oxide fine particle is not practically utilized as a fine particle for forming an uneven structure expressing an anti-glareness or an anti-Newton-ring property. In contrast, according to the present invention, as described later, since the metal oxide fine particle can form an optically effective uneven structure at a small ratio relative to a resin component, the optical characteristics (such as anti-glareness or anti-Newton-ring property) and the conductivity can be compatible with each other.

The hardcoat layer may contain another fine particle (a second fine particle) as far as an advantage due to the metal oxide fine particle is not deteriorated. The second fine particle may include an organic fine particle and an inorganic fine particle.

Considering the abrasion resistance or others, a fine particle of a crosslinked resin is preferred as the organic fine particle. Examples of the crosslinked resin for the fine particle may include a crosslinked thermoplastic resin [for example, a crosslinked olefinic resin (e.g. , a crosslinked polyethylene and a crosslinked polypropylene), a crosslinked styrenic resin (e.g., a crosslinked polystyrene, a crosslinked polydivinylbenzene, a crosslinked polyvinyltoluene, and a crosslinked styrene-methyl methacrylate copolymer), and a crosslinked acrylic resin (e.g., a crosslinked poly(methyl methacrylate))], and a thermosetting resin (for example, a melamine resin, a urea resin, an aminobenzoguanamine resin, asiliconeresin, anepoxyresin, andapolyurethane) . These organic fine particles may be used alone or in combination.

The inorganic compound for the inorganic fine particle may include an inorganic compound other than a metal oxide, for example, a metal simple substance, a metal sulfate (e. g. , calcium sulfate and barium sulfate), a metal silicate (e.g., calcium silicate, aluminum silicate, magnesium silicate, and magnesium aluminosilicate), a metal phosphate (e.g., calcium phosphate and magnesium phosphate), a metal carbonate (e.g., magnesium carbonate, heavy calcium carbonate, and light calcium carbonate), a metal hydroxide (e.g., aluminum hydroxide, calcium hydroxide, and magnesium hydroxide), a silicon compound (e.g., a silica, a white carbon, and a glass), and a natural mineral substance (e. g. , a zeolite, a diatomaceous earth, a baked diatomaceous earth, an alumina, atalc, a mica, a kaolin, a sericite, a bentonite, a montmorillonite, a smectite, and a clay).

The average primary particle size of the second fine particle is not particularly limited to a specific one. The average primary particle size of the second fine particle may for example be selected from the range of about 1 nm to 10 $\mu$m and may for example be within the range of the average primary particle size of the metal oxide fine particle.

The ratio of the second fine particle is, for example, not more than 50 parts by weight, preferably not more than 30 parts by weight (e.g., about 0.01 to 30 parts by weight), and more preferably not more than 10 parts by weight (e.g. , about 0.1 to 10 parts by weight) relative to 100 parts by weight of the metal oxide fine particle.

The hardcoat layer may contain various additives, for example, a stabilizer (e.g., an antioxidant and an ultraviolet absorber), a surfactant, a water-soluble polymer, a filler, a crosslinking agent, a coupling agent, a coloring agent, a flame retardant, a lubricant, a wax, a preservative, a viscosity modifier, a thickener, a leveling agent, and a defoaming agent.

According to the present invention, for unknown reasons, probably because a small amount of the metal oxide fine particle aggregates and forms a nucleus in the hardcoat layer without use of a flocculating agent for a fine particle (for example, a flocculating agent described in Japanese Patent Application Laid-Open Publication No. 2009-265143 (JP-2009-265143A)) and allows the resin component to rise around the particle, an uneven structure having excellent optical characteristics can be formed. Thus the hardcoat layer is substantially free from a flocculating agent. Incidentally, it is presumed that the species of the curable resin-precursor, the thermoplastic resin, and the solvent, the mixing ratio, and others are also involved in the effects of the present invention.

The hardcoat layer has, for example, a thickness of about 0.5 to 30 $\mu$m, preferably about 1 to 25 $\mu$m, and more preferably about 3 to 20 $\mu$m (particularly about 5 to 15 $\mu$m).

[Transparent film or sheet]

As the transparent film or sheet (or substrate film), there may be exemplified a resin sheet in addition to glass and ceramics. As a resin constituting the transparent film, the resin similar to that of the above-mentioned hardcoat layer may be used. The preferred transparent film includes a transparent polymer film, for example, a film formed with a cellulose derivative [e.g., a cellulose acetate such as a cellulose triacetate (TAC) or a cellulose diacetate], a polyester-series resin [e.g., a poly(ethylene terephthalate) (PET), a poly (butylene terephthalate) (PBT), andapolyarylate-series resin], apolysulfone-series resin [e. g. , a polysulfone, and a polyether sulfone], a polyether ketone-series resin [e.g., a polyether ketone and a polyether ether ketone], a polycarbonate-series resin (e.g., a bisphenol A-based polycarbonate), a polyolefinic resin (e.g., a polyethylene, and a polypropylene), a cyclic polyolefinic resin [e.g., TOPAS (registered trademark), ARTON (registered trademark), and ZEONEX (registered trademark)], a halogen-containing resin (e.g., a poly(vinylidene chloride)), a (meth)acrylic resin, a styrenic resin (e.g. , a polystyrene), a vinyl acetate- or vinyl alcohol-series resin (e.g., a poly(vinyl alcohol) and an ethylene-vinyl alcohol copolymer) and others. The transparent film may be stretched monoaxially or biaxially.

When the optical film is used in the upper electrode substrate of a touch panel (an electrode substrate which contacts with a pressing member such as a finger or a pen), a plastic sheer or film (a non-stretched or stretched plastic sheer or film) may be used in view of the necessity of flexibility among these films.

The optically isotropic transparent film may include glass, a non-stretched or stretched plastic sheet or film. For example, the preferred one includes a sheet or film formed from a polyester (e.g., a PET, and a PBT), a cellulose derivative, particularly, a cellulose ester [e.g., a cellulose acetate (such as a cellulose diacetate or a cellulose triacetate) and a cellulose acetate $C_{3-4}$acylate (such as a cellulose acetate propionate or a cellulose acetate butyrate)]. In particular, when the cellulose derivative is used as the thermoplastic resin of the hardcoat layer, use of a film comprising the cellulose derivative as the transparent film can also improve the adhesion of both films.

The thickness of the transparent film may be selected within the range of, for example, about 5 to 2000 $\mu$m, preferably about 15 to 1000 $\mu$m, and more preferably about 20 to 500 $\mu$m.

[Low-refraction layer]

The optical film of the present invention (in particular, an optical film to be used as an anti-glare film) may further have a low-refraction layer formed on the hardcoat layer in order to decrease the surface reflectance. When the low-refraction layer laminated on the hardcoat layer is disposed as an outermost layer of the optical film for a display apparatus (such as a liquid crystal display apparatus) or the like, the reflection of a light [e.g. , a light source around the display apparatus (such as an ambient light or an external light source)] from the surface of the optical film can be effectively prevented.

As the low-refraction layer, a conventional low-refraction layer (for example, a low-refraction layer described in Japanese Patent Application Laid-Open Publication No. 2001-100006 (JP-2001-100006A) and that described in Japanese Patent Application Laid-Open Publication No. 2008-58723 (JP-2008-58723A)) can be used. The low-refraction layer usually comprises a low-refraction resin (or a resin having a low refraction index). The low-refraction resin may include, for example, a methylpentene resin, a diethylene glycol bis(allyl carbonate) resin, and a fluorine-containing resin such as apoly(vinylidene fluoride) (PVDF) orapoly(vinyl fluoride) (PVF). Moreover, it is preferable that the low-refraction layer contain a fluorine-containing compound. In addition to the fluorine-containing resin, a fluorine-containing resin-precursor or the like is used. The fluorine-containing compound can desirably reduce the refraction index of the low-refraction layer.

The fluorine-containing resin-precursor may include a fluorine-containing resin-precursor which has a fluorine atom and a reactive functional group (e.g., a curable group such as a crosslinkable group or a polymerizable group) by heat or an actinic ray (e.g., an ultraviolet ray or an electron beam) or the like and which can be cured or crosslinked by heat or an actinic ray or the like to form a fluorine-containing resin (particularly a cured or crosslinked resin).

Examples of such a fluorine-containing resin-precursor may include a fluorine atom-containing thermosetting compound or resin [a low molecular weight compound which has a fluorine atom, and a reactive group (e.g., an epoxy group, an isocyanate group, a carboxyl group, and a hydroxyl group), a polymerizable group (e.g. , a vinyl group, an allyl group, and a (meth) acryloyl group) or others], a fluorine atom-containing photo-curable compound or resin which is curable by an actinic ray such as an ultraviolet ray (for example, an ultraviolet ray-curable compound such asa photo-curablefluorine-containing monomer or oligomer), and others.

As the thermosetting compound or resin, there may be mentioned, for example, a low molecular weight resin obtainable by using at least a fluorine-containing monomer, e.g., an epoxy-series fluorine-containing resin obtainable by using a fluorine-containing polyol (particularly a diol) instead of part or all of polyol components as a constituting monomer; in the same way, an unsaturated polyester-series fluorine-containing resin obtainable by using a fluorine atom-containing polyol and/or fluorine atom-containing polycarboxylic acid component instead of part or all of polyol and/or polycarboxylic acid component(s); a urethane-series fluorine-containing resin obtainable by using a fluorine atom-containing polyol and/or polyisocyanate component instead of part or all of polyol and/or polyisocyanate component(s); and others. These thermosetting compounds or resins may be used alone or in combination.

The photo-curable compound may include, for example, a monomer, an oligomer (or a resin, in particular a low molecular weight resin). Examples of the monomer may include a fluorine atom-containing monomer corresponding to the monofunctional monomer and polyfunctional monomer exemplified in the paragraph of the anti-glare layer mentioned above [e.g., a monofunctional monomer such as a fluorine atom-containing (meth) acrylic monomer (such as a fluorinated alkyl ester of (meth)acrylic acid), or a vinyl-series monomer (such as a fluoroolefin); and a di (meth) acrylate of a fluorinated alkylene glycol such as 1-fluoro-1,2-di(meth)acryloyloxyethylene]. Moreover, a fluorine atom-containing oligomer or resin corresponding to the oligomer or resin exemplified in the paragraph of the anti-glare layer may be used as the oligomer or resin. These photo-curable compounds may be used alone or in combination.

Further, the low-refraction layer may contain an inorganic filler in order to improve the strength thereof. As the inorganic filler, there may be used, for example, a filler described in the above-mentioned JP-2001-100006A, and others. A filler having a low refraction index (such as a silica or magnesium fluoride), particularly a silica, is preferred. The silica maybe a hollow silica as described in Japanese Patent Laid-Open Publication Nos. 2001-233611 (JP-2001-233611A), 2003-192994 (JP-2003-192994A), or others.

The inorganic filler has an average particle size (or particle diameter) of not more than 100 nm, preferably not more than 80 nm (for example, about 10 to 8 nm), and more preferably about 20 to 70 nm.

The proportion of the inorganic filler in the low-refraction layer may for example be not less than 1% by weight and is, for example, about 5 to 90% by weight. Moreover, the surface of the inorganic filler maybe modified with a coupling agent (a titanium coupling agent, a silane coupling agent).

The low-refraction layer has a refraction index of, for example, about 1.3 to 1.5 and preferably about 1.35 to 1.45.

The low-refraction layer has a thickness of, for example, about 50 to 1000 nm, preferably about 60 to 500 nm, and more preferably about 70 to 300 nm (particularly about 80 to 200 nm).

[Characteristics of optical film]

Since the optical film of the present invention has a finely uneven surface structure, the reflection of an ambient light in an LCD or the generation of Newton rings in a touch panel (particularly a resistive touch panel) can effectively be prevented or inhibited. Moreover, the optical film has a high transmitted image clarity and allows a sparkling-subdued clear image to be displayed on a display screen of a display apparatus.

The optical film of the present invention has a total light transmittance of, for example, about 70 to 100%, preferably about 80 to 100%, and more preferably about 85 to 99% (particularly about 90 to 95%).

The optical film of the present invention has a haze of, for example, about 0.1 to 20%, preferably about 0.2 to 10%, and more preferably about 0.3 to 5% (particularly about 0.3 to 4%). According to the present invention, due to such a low haze value, the optical film provides both an anti-glareness or an anti-Newton-ring property and a visibility in a display screen of a display apparatus.

The optical film of the present invention has a transmitted image clarity of, for example, about 40 to 100%, preferably about 45 to 90%, and more preferably about 50 to 80% (particularly about 55 to 70%) when an optical slit of 0.5 mm width is used. When the transmitted image clarity is within the above range, the rectilinear transmitted light is less scattered. Thus, even when the optical film is disposed on a high definition display apparatus, scattering fromeachpicture element is reduced. As a result, sparkling can be prevented.

The transmitted image clarity is a measure for quantifying defocusing or distortion of a light transmitted through a film. The transmitted image clarity is obtained by measuring a transmitted light from a film through a movable optical slit, and calculating amount of light in both a light part and a dark part of the optical slit. That is, when a transmitted light is defocused by a film, the slit image formed on the optical slit becomes thicker, and as a result the amount of light in the transmitting part is not more than 100%. On the other hand, in the non-transmitting part, the amount of light is not less than 0% due to leakage of light. The value C of the transmitted image clarity is defined by the following formula according to the maximum value M of the transmitted light in the transparent part of the optical slit, and the minimum value m of the transmitted light in the opaque part thereof.

$$C(\%) = [(M-m)/(M+m)] \times 100$$

That is, the closer the value C comes to 100%, the lower the image defocusing depending on the transparent conductive film becomes [R43eference; SugaandMitamura, Tosou Gijutsu, July, 1985].

The uneven surface structure has an uneven structure which can express an anti-glareness or an anti-Newton-ring property. That is, for a measuring method in accordance with JIS (Japanese Industrial Standards) B0601, the uneven surface structure has an arithmetic average roughness Ra of, for example, about 0.01 to 0.3 $\mu$m, preferably about 0.02 to 0.2 $\mu$m, and more preferably about 0.03 to 0.15 $\mu$m (particularly about 0.05 to 0.13 $\mu$m). The uneven surface structure has an average spacing of concavo-convexes (Sm) of, for example, about 10 to 500 $\mu$m, preferably about 50 to 300 $\mu$m, and more preferably about 100 to 250 $\mu$m (particularly about 110 to 220 $\mu$m).

When the optical film of the present invention is used as an anti-Newton-ring film, the optical film may further have a transparent conductive layer laminated on the hardcoat layer. Examples of the transparent conductive layer may include a transparent conductive layer comprising a metal oxide [such as an indium oxide-tin oxide-series compound oxide (ITO)] and a transparent conductive layer comprising a conductive polymer.

The optical film of the present invention has a hardcoat property and has a high anti-glareness or anti-Newton-ring property. Further, the optical film has an excellent clearness (or sharpness) of a transmitted image and reduces blur of characters in a display surface (or visual surface). Thus the optical film of the present invention can be used for various display apparatuses, for example, a display apparatus such as a liquid crystal display (LCD) apparatus, a plasma display, or a display apparatus provided with a touch panel. For example, the optical film may be utilized as an anti-glare film of an LCD apparatus or an electrode substrate for a touch panel. Further, the optical film may be used in combination with other optical elements [for example, various optical elements to be disposed into a light path, e.g., a polarizing plate, an optical retardation plate (or a phase plate), and a light guide plate].

[Process for producing optical film]

The optical film of the present invention can be produced by applying a coating composition on at least one side of a transparent film to form a coating layer, wherein the coating composition comprises a curable resin-precursor, a thermoplastic resin, and a metal oxide fine particle having an average primary particle size of 1 to 100 nm; drying the coating layer; and irradiating the dried layer with an active energy ray to cure the curable resin-precursor.

The coating composition usually comprises a liquid mixture containing the curable resin-precursor, the thermoplastic resin, the metal oxide fine particle, and a solvent (in particular, a liquid composition such as a uniform solution). Inapreferredembodiment, as the liquid mixture, a composition containing the photo-curable compound, the thermoplastic resin, the metal oxide fine particle, the photopolymerization initiator, the solvent in which both the photo-curable compound and the thermoplastic resin are soluble is used.

The solvent may be selected depending on the species and solubility of the curable resin-precursor and the thermoplastic resin, and needs only to be a solvent for uniformly dissolving at least solid content (the curable resin-precursor, the thermoplastic resin, a reaction initiator, other additive(s)). As such a solvent, there may be mentioned, for example, a ketone (e.g., acetone, methyl ethyl ketone, methyl isobutyl ketone, and cyclohexanone), an ether (e.g., dioxane and tetrahydrofuran), an aliphatic hydrocarbon (e.g., hexane), an alicyclic hydrocarbon (e.g., cyclohexane), an aromatic hydrocarbon (e.g., toluene and xylene), a carbon halide (e.g., dichloromethane and dichloroethane), an ester (e.g., methyl acetate, ethyl acetate, and butyl acetate), water, an alcohol (e.g., ethanol, isopropanol, butanol, cyclohexanol, and 1-methoxy-2-propanol), a cellosolve (e.g., methyl cellosolve, ethyl cellosolve, and propylene glycol monomethyl ether), a cellosolve acetate, a sulfoxide (e.g., dimethyl sulfoxide), and an amide (e.g., dimethylformamide and dimethylacetamide). These solvents may be used alone or in combination. The solvent may be a mixed solvent. Among these solvents, a ketone (such as methyl ethyl ketone) or an alcohol (such as butanol or 1-methoxy-2-propanol) is preferred. These solvents (the ketone and the alcohol) may be mixed. For example, the ketone and the alcohol may be mixed in a ratio (weight ratio) of about 90/10 to 10/90, preferably about 70/30 to 30/70, and more preferably about 60/40 to 40/60 as a ratio of the former/the latter. According to the present invention, the degree of aggregation of the metal oxide fine particle may be controlled by appropriately using the solvents in combination.

The concentration of the solute (the curable resin-precursor, the thermoplastic resin, the metal oxide fine particle, the reaction initiator, and other additive(s)) in the liquid mixture can be selected within the range not deteriorating castability and coatability, and is, for example, about 1 to 80% by weight, preferably about 5 to 60% by weight, and more preferably about 15 to 40% by weight (particularly about 20 to 40% by weight).

When the liquid mixture is applied on a transparent film, the transparent film sometimes dissolves or swells according to the species of solvents. For example, when a coating composition (uniform solution) containing the resin component is applied on a cellulose triacetate film, the coated surface of the cellulose triacetate film sometimes elutes, corrodes, or swells according to the species of solvents. In this case, the surface to be coated of the transparent film (e.g., a cellulose triacetate film) may be applied with a solvent-resisting coating agent in advance to form an optically isotropic coating layer with solvent resistance. Such a coating layer can be formed with, for example, a thermoplastic resin such as an AS resin, a polyester-series resin, and a poly (vinyl alcohol)-series resin (e.g., a poly(vinyl alcohol), an ethylene-vinyl alcohol copolymer), a curable resin (setting resin) such as an epoxy resin, a silicone-series resin, and an ultraviolet curable resin. Moreover, when the liquid mixture or coating composition is applied on a transparent support, a solvent in which the transparent film does not dissolve, corrode or swell may be selected according to the species of the transparent film.

The coating method may include a conventional manner, for example, a spray, a roll coater, an air knife coater, a blade coater, a rod coater, a reverse coater, a bar coater, a comma coater, a dip and squeeze coater, a die coater, a gravure coater, a microgravure coater, a silkscreen coater, a dipping method, a spraying method, and a spinner method. Among these methods, a bar coater or a gravure coater is used widely. If necessary, the coating composition may be applied a plurality of times.

After the liquid mixture is cast or applied, the solvent is evaporated. The evaporation or removal of the solvent may usually be carried out by, for example, drying at an temperature of about 30 to 200°C (e.g., about 30 to 100°C), preferably about 40 to 120°C, and more preferably about 40 to 80°C according to the boiling point of the solvent.

According to the present invention, although the coating composition does not contain a flocculating agent, the nanometer-sized metal oxide fine particle moderately aggregates in the coating composition and provides a nucleus for a projection of the resin component to form an uneven structure on a surface of the layer.

The hardcoat layer having such an uneven surface structure is finally cured with an actinic ray (e.g., an ultraviolet ray, an electron beam), heat, or other means to form a cured resin. The curing of the precursor may be carried out by combining heating, light irradiation, or other means, depending on the species of the curable resin-precursor.

The heating temperature may be selected from an appropriate range, for example, about 50 to 150°C. The light irradiation may be selected depending on the species of a photo-curable component or others. An ultraviolet ray, an electron beam, and others may usually be used. A widely used exposure source is usually an ultraviolet ray irradiation apparatus. If necessary, the light irradiation may be carried out under an inactive gas atmosphere. In particular, photo curing of the precursor not only allows immediate immobilization (or fixation) but also inhibits deposition of a low molecular weight component (such as an oligomer) from the inside of the transparent film due to heat. Further, the curing of the precursor can impart an abrasion resistance to the hardcoat layer. Use of the optical film for a touch panel can prevent the surface structure of the touch panel from damaging or others even when the touch panel is repeatedly operated, and the touch panel has an improved durability.

For the formation of the low-refraction layer on the hardcoat layer, the low-refraction layer may be formed by applying or casting a coating composition and then curing the coated layer with heat, an actinic ray, or other means, usually in the same manner as in the hardcoat layer.

According to the present invention, in order to improve the adhesion of other layer(s) (for example, a low-refraction layer or a transparent conductive layer) to the hardcoat layer, the hardcoat layer may be subjected to a surface treatment. The surface treatment may include a conventional surface treatment, for example, a corona discharge treatment, a flame treatment, a plasma treatment, and an ozone or ultraviolet irradiation treatment.

EXAMPLES

The following examples are intended to describe this invention in further detail and should by no means be interpreted as defining the scope of the invention. Transparent conductive films obtained in Examples and Comparative Examples were evaluated by the following items.

[Abrasion resistance of hardcoat layer]

A #0000 steel wool was allowed to go back and forth on the surface of the hardcoat layer ten times at a weighting of 9. 5 N/cm$^2$. Then the number of abrasions on the hardcoat layer was counted, and the abrasion resistance was evaluated based on the following criteria.
"A": The number of abrasions is 0.
"B": The number of abrasions is 1 to 3.
"C": The number of abrasions is 4 to 6.
"D": The number of abrasions is not less than 7.

[Abrasion resistance of low-refraction layer]

A #0000 steel wool was allowed to go back and forth on the surface of the low-refraction layer ten times at a weighting of 2.45 N/cm$^2$. Then the number of abrasions on the low-refraction layer was counted, and the abrasion resistance was evaluated based on the following criteria.
"A": The number of abrasions is 0 to 3.
"B": The number of abrasions is 4 to 6.
"C": The number of abrasions is 7 to 9.
"D": The number of abrasions is not less than 10.

[Pencil hardness]

The pencil hardness was measured by applying a load of 4.9 N in accordance with JIS K5400.

[Total light transmittance and haze]

The haze was measured using a haze meter (manufactured by Nippon Denshoku Industries Co., Ltd., the trade name "NDH-5000W") in accordance with JIS K7136.

[Transmitted image (Image) clarity]

The image clarity of the optical film was measured in accordance with JIS K7105 by using an image clarity measuring apparatus (manufactured by Suga Test Instruments Co., Ltd., trade name "ICM-1T"). The image clarity was measured in the following method: the film was installed so that the machine direction of the film would be parallel to the teeth direction of an optical slit. The image clarity was measured by using the image clarity measuring apparatus provided with an optical slit (the slit width = 0.5 mm).

[Anti-glareness]

A black film was pasted on the transparent film of the optical film, and a fluorescent lamp (10000 cd/m$^2$) having an exposed (uncovered) fluorescent tube was placed at a point 2 m apart from the optical film and reflected on the surface of the optical film. The degree of blurring of the reflected image was visually observed and evaluated on the basis of the following criteria.
"A": No or slight reflected outline of the fluorescent lamp is observed.
"B": The reflected image of the fluorescent lamp is partly blurred, and the reflected outline thereof is clearly observed.
"C": The reflected image of the fluorescent lamp is hardly blurred, and the reflected outline thereof is very clearly observed.

[Evaluation of sparkling]

A transparent acryl board having a thickness of 3 mm (manufactured by Sumitomo Chemical Co. , Ltd., SUMIPEX) was placed on a 17-inch LCD monitor (1024 x 1280 pixels; SXGA, resolution: 96 ppi), and the resulting optical film was disposed thereon. A white image was displayed on the LCD monitor, and the sparkling (glare) on the display surface was visually evaluated on the basis of the following criteria. The used LCD monitor had a clear-type polarizing plate on a surface-layer (or front) side thereof.

"A": No sparkling is recognized.
"B": Sparkling is slightly recognized.
"C": Sparkling is recognized.

[Evaluation of transmitted image]

The resulting optical film was pasted on a 42-inch full HD liquid crystal television (1920 x 1080 pixels) with a pressure sensitive adhesive double coated tape (manufactured by Nitto Denko Corporation, CS9621), and an image was displayed on the liquid crystal television screen. The transmitted image was visually observed and evaluated on the bases of the following criteria. The used LCD monitor had a clear-type polarizing plate on a surface-layer (or front) side thereof.

"A": The transmitted image is fully clearly observed.
"B": Although the transmitted image is clearly observed, the transmitted image is slightly inferior to an image displayed on an ordinary clear liquid crystal television screen in clearness.
"C": The observed transmitted image is whitish.
"D": The transmitted image is blurred and unclearly observed.

[Anti-Newton-ring property]

The optical film was placed on a glass substrate so that the hardcoat layer of the optical film would be in contact with the glass substrate. The optical film was pressed from the side of the transparent film with a finger. The generation state of Newton rings was visually observed and evaluated on the basis of the following criteria.
"A": No Newton rings were generated.
"B": Newton rings were generated.

[Reflectance]

A black film was pasted on the transparent film of the optical film, and the integrated reflectance (in terms of luminosity factor) was measured by an integrating sphere reflection intensity measuring apparatus (manufactured by Hitachi High-Technologies Corporation, U-3300).

[Arithmetic average roughness Ra and average spacing of concavo-convexes Sm]

The arithmetic average roughness Ra and the average spacing of concavo-convexes Sm were measured in accordance with JIS B0601 by using a contacting profiling surface texture and contour measuring instrument (manufactured by Tokyo Seimitsu Co., Ltd., surfcom570A) under conditions as follows: a scanning range of 3 mm and number of times of 2.

[Microscopically observed image of surface structure]

A black film was pasted on the transparent film of the optical film, and the uneven shape of the surface was taken by a laser reflection microscope.

[Preparation of coating composition]

(Coating composition for hardcoat layer: HC-1)

In a mixed solvent containing 120 parts by weight of methyl ethyl ketone (MEK), 100 parts by weight of 1-methoxy-2-propanol (MMPG), and 5 parts by weight of 1-butanol (BuOH) (boiling point: 113°C), 100 parts by weight of dipentaerythritol hexaacrylate (manufactured by DAICEL-CYTEC Company, Ltd., DPHA) and 2 parts by weight of a cellulose acetate propionate (manufactured by Eastman, Ltd., CAP) were dissolved. To this solution, 2 parts by weight of a photopolymerization initiator (manufactured by Ciba Japan K. K. , the trade name "IRGACURE 184") was added and dissolved. Further, 5 parts by weight of an ATO particle [manufactured by JGC Catalysts and Chemicals Ltd., "ELCOM SH-1212ATV", particle size: 8 nm, a dispersion in 20% by weight of a mixed alcohol solvent (ethanol/isopropanol = 80/20 (weight ratio))] was added to the resulting solution, and the mixture was stirred for one hour to prepare a coating composition for hardcoat layer: HC-1.

(Coating composition for hardcoat layer: HC-2)

A coating composition HC-2 for hardcoat layer was prepared in the same manner as in the HC-1 except that 10 parts by weight of a tin oxide particle (manufactured by CIK NanoTek Corporation, particle size: 19 nm, a dispersion in 10% by weight of methyl isobutyl ketone) was used instead of the ATO particle.

(Coating composition for hardcoat layer: HC-3)

A coating composition HC-3 for hardcoat layer was prepared in the same manner as in the HC-1 except that 10 parts by weight of a zinc oxide particle (manufactured by CIK NanoTek Corporation, particle size: 52 nm, a dispersion in 10% by weight of MMPG) was used instead of the ATO particle.

(Coating composition for hardcoat layer: HC-4)

A coating composition HC-4 for hardcoat layer was prepared in the same manner as in the HC-1 except that the amount of the ATO particle was changed to 3 parts by weight.

(Coating composition for hardcoat layer: HC-5)

A coating composition HC-5 for hardcoat layer was prepared in the same manner as in the HC-1 except that the amount of the ATO particle was changed to 0.3 parts by weight.

(Coating composition for hardcoat layer: HC-6)

A coating composition HC-6 for hardcoat layer was prepared in the same manner as in the HC-1 except that the amount of the ATO particle was changed to 5 parts by weight.

(Coating composition for hardcoat layer: HC-7)

A coating composition HC-7 for hardcoat layer was prepared in the same manner as in the HC-1 except that the amount of the ATO particle was changed to 10 parts by weight.

(Coating composition for hardcoat layer: HC-8)

A coating composition HC-8 for hardcoat layer was prepared in the same manner as in the HC-1 except that the cellulose acetate propionate was not added.

(Coating composition for low-refraction layer: LC-1)

A commercially available dispersion containing a hollow silica fine particle (manufactured by JGC Catalysts and Chemicals Ltd., "ELCOM SH-1103SIC", solid content: 3% by weight) was used.

(Coating composition for low-refraction layer: LC-2)

A commercially available coating composition containing a thermosetting fluorine-containing compound (manufactured by Nissan Chemical Industries, Ltd., "LR204-6", solid content: 1% by weight) was used.

Example 1

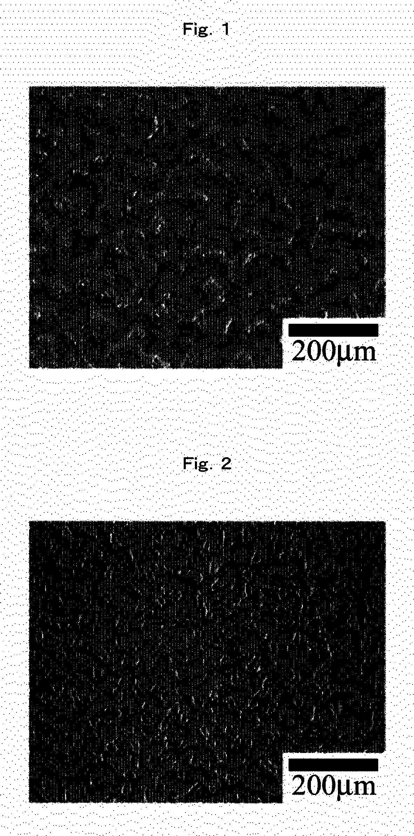

As a transparent film, a cellulose triacetate film (manufactured by Fujifilm Corporation, TAC, thickness: 80 $\mu$m) was used. The coating composition HC-1 for hardcoat layer was applied on the film with the use of a bar coater #30 and then dried at 70°C for one minute. The coated film passed through an ultraviolet irradiation equipment (manufactured by Ushio Inc., a high-pressure mercury lamp, dose of ultraviolet ray; 800 mJ/cm$^2$) for ultraviolet curing treatment to form a hardcoat layer having a hardcoat property and an uneven surface structure. The thickness of the hardcoat layer in the resulting optical film was about 10 $\mu$m. The observation of the surface of the resulting optical film by a laser-microscopic photograph is shown in Fig. 1.

Example 2

An optical film was produced in the same manner as in Example 1 except that the coating composition HC-2 for hardcoat layer was used instead of the coating composition HC-1 for hardcoat layer.

Example 3

An optical film was produced in the same manner as in Example 1 except that the coating composition HC-3 for hardcoat layer was used instead of the coating composition HC-1 for hardcoat layer.

Example 4

An optical film was produced in the same manner as in Example 1 except that the coating composition HC-4 for hardcoat layer was used instead of the coating composition HC-1 for hardcoat layer. The observation of the surface of the resulting optical film by a laser-microscopic photograph is shown in Fig. 2.

Example 5

The coating composition LC-1 for low-refraction layer was applied on the hardcoat layer of the optical film obtained in Example 1 with the use of a bar coater #4 and dried at 60°C for one minute. Thereafter, the coated film passed through an ultraviolet irradiation equipment (manufactured by Ushio Inc. , a high-pressure mercury lamp, dose of ultraviolet ray; 800 mJ/cm$^2$) for ultraviolet curing treatment to form a low-refraction layer. The thickness of the low-refraction layer in the resulting low-reflection optical film was about 100 nm.

Example 6

The coating composition LC-2 for low-refraction layer was applied on the hardcoat layer of the optical film obtained in Example 1 with the use of a bar coater #6 and dried at 60°C for one minute. Thereafter, the coated film was hot-cured (or heat-cured) at 90°C for 5 minutes to form a low-refraction layer. The thickness of the low-refraction layer in the resulting low-reflection optical film was about 100 nm.

Comparative Example 1

An optical film was produced in the same manner as in Example 1 except that the coating composition HC-5 for hardcoat layer was used instead of the coating composition HC-1 for hardcoat layer.

Comparative Example 2

An optical film was produced in the same manner as in Example 1 except that the coating composition HC-6 for hardcoat layer was used instead of the coating composition HC-1 for hardcoat layer.

Comparative Example 3

An optical film was produced in the same manner as in Example 1 except that the coating composition HC-7 for hardcoat layer was used instead of the coating composition HC-1 for hardcoat layer.

Comparative Example 4

An optical film was produced in the same manner as in Example 1 except that the coating composition HC-8 for hardcoat layer was used instead of the coating composition HC-1 for hardcoat layer. Incidentally, the resulting optical film has a high hardness and an excellent abrasion resistance while the film easily cracks, so that the practical use is hindered. Further, the film strongly curls toward the side of the coated surface, and the curled film sometimes cracks only by unbending (or stretching). There is therefore a high possibility that the film cracks during film-conveying (or film-sending) or rolling by a manufacturing machine, and the film is not good to manufacture.

Comparative Example 5

The coating composition LC-1 for low-refraction layer was applied on the hardcoat layer of the optical film obtained in Comparative Example 1 with the use of a bar coater #4 and dried at 60°C for one minute. Thereafter, the coated film passed through an ultraviolet irradiation equipment (manufactured by Ushio Inc., a high-pressure mercury lamp, dose of ultraviolet ray; 800 mJ/cm$^2$) for ultraviolet curing treatment to forma low-refraction layer. The thickness of the low-refraction layer in the resulting low-reflection optical film was about 100 nm.

Comparative Example 6

A low-reflection optical film was produced in the same manner as in Comparative Example 4 except that the optical film obtained in Comparative Example 2 was used instead of the optical film obtained in Comparative Example 1.
Table 1 shows the evaluation results of the optical films obtained in Examples and Comparative Examples. Incidentally, Examples 5 to 6 and Comparative Examples 4 to 5 were not evaluated for the anti-Newton-ring property.
[Table 1]

Table 1

| | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| Coating composition for hardcoat layer | HC-1 | HC-2. | HC-3 | HC-4 | HC-1 | HC-1 | HC-5 | HC-6 | HC-7 | HC-8 | HC-5 | HC-6 |
| Coating composition for low-refraction layer | - | - | - | - | LC-1 | LC-2 | - | - | - | - | LC-1 | LC-1 |
| Fine particle | ATO | Tin oxide | Zinc oxide | ATO | ATO | ATO | ATO | ATO | ATO | ATO | ATO | ATO |
| Fine particle/ DPHA ratio | 1 | 1 | 1 | 3 | 1 | 1 | 0.3 | 5 | 10 | 1 | 0.3 | 5 |
| Abrasion resistance 9.8 N/cm$^2$ (Evaluation/ numbers of abrasions) | A/0 | A/0 | A/0 | B/2 | - | - | A/0 | C/5 | D/11 | A/0 | - | - |

(continued)

| | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| Abrasion resistance 2.45N/cm$^2$ (Evaluation/ numbers of abrasions) | - | - | - | - | A/2 | B/4 | - | - | - | - | A/2 | C/7 |
| Pencil hardness | 3H | 3H | 3H | 3H | 3H | 3H | 3H | 3H | 3H | 3H | 3H | 3H |
| Total light transmittance (%) | 91.6 | 91.9 | 91.8 | 91.0 | 94.1 | 93.6 | 92.4 | 86.1 | 79.1 | 91.8 | 94.3 | 88.2 |
| Haze (%) | 0.9 | 0.7 | 0.8 | 2.4 | 0.4 | 0.5 | 0.5 | 7.2 | 16.7 | 4.3 | 0.3 | 6.3 |
| Reflectance (%) | 4.5 | 4.4 | 4.5 | 4.3 | 1.2 | 2.1 | 4.5 | 4.3 | 4.2 | 4.1 | 1.1 | 3.2 |
| Transmitted image clarity (%) | 59.2 | 62.1 | 60.6 | 55.3 | 62.3 | 64.1 | 72.3 | 47.6 | 29.8 | 35.7 | 75.5 | 50.9 |
| Ra ($\mu$m) | 0.07 | 0.06 | 0.09 | 0.12 | 0.05 | 0.06 | 0.02 | 0.13 | 0.17 | 0.18 | 0.01 | 0.10 |
| Sm ($\mu$m) | 182 | 172 | 189 | 114 | 214 | 205 | 254 | 38 | 30 | 42 | 257 | 39 |
| Anti-glareness | A | A | A | A | A | A | B | A | A | A | B | A |
| Sparkling | A | A | A | B | A | A | A | C | C | C | A | C |
| Evaluation of transmitted image | A | A | A | B | A | A | A | C | D | D | A | C |
| Anti-Newton-ring property | A | A | A | A | - | - | B | A | A | A | - | - |

As apparent from the results shown in Table 1, the optical films of Examples have a high abrasion resistance and a high mechanical strength and also have excellent optical characteristics. In contrast, for the optical films of Comparative Examples, the abrasion resistance can be incompatible with the optical characteristics.

INDUSTRIAL APPLICABILITY

The optical film of the present invention is usable as an optical film for a variety of display apparatuses (or devices), for example, a liquid crystal display (LCD) apparatus, a cathode ray tube display apparatus, an organic or inorganic electroluminescence (EL) display, a field emission display (FED), a surface-conduction electron-emitter display (SED), a rear projection television display,a plasma display,a touch panel-equipped display apparatus.
The touch panel may be a touch panel (particularly, a resistive touch panel) used in combination with a display apparatus (e.g., a liquid crystal display apparatus, a plasma display apparatus, and an organic or inorganic EL display apparatus) for a display screen of an electrical and electronics or precision instrument (e.g., a personal computer, a television, a mobile phone, an amusement apparatus, a mobile device, a clock or a watch, and a calculator).
Among others, the optical film of the present invention is particularly useful as an anti-glare film for LCD or an anti-Newton-ring film for touch panel.

**Claims**

1.  An optical film comprising:

a transparent film; and
a hardcoat layer formed on at least one side of the transparent film,

wherein the hardcoat layer is a cured layer comprising:

a curable resin-precursor;
a thermoplastic resin; and
a metal oxide fine particle having an average primary particle size of 1 to 100 nm.

2. An optical film according to claim 1, wherein the thermoplastic resin is nonreactive to the curable resin-precursor.

3. An optical film according to claim 1 or 2, wherein the thermoplastic resin comprises a cellulose derivative.

4. An optical film according to any one of claims 1 to 3, wherein the ratio of the metal oxide fine particle is 0.5 to 4 parts by weight relative to 100 parts by weight of the curable resin-precursor.

5. An optical film according to any one of claims 1 to 4, wherein the metal oxide fine particle comprises at least one fine particle selected from the group consisting of antimony tin oxide, antimony oxide, tin oxide, and zinc oxide.

6. An optical film according to any one of claims 1 to 5, wherein the curable resin-precursor comprises a tetra- or more-functional precursor.

7. An optical film according to any one of claims 1 to 6, wherein the hardcoat layer has an uneven surface structure having an arithmetic average roughness (Ra) of 0.03 to 0.15 $\mu$m and an average spacing of concavo-convexes (Sm) of 50 to 300 $\mu$m.

8. An optical film according to any one of claims 1 to 7, wherein the hardcoat layer is substantially free from a flocculating agent.

9. An optical film according to any one of claims 1 to 8, which has a haze of 0.3 to 4%.

10. An optical film according to any one of claims 1 to 9, which further comprises a low-refraction layer formed on the hardcoat layer.

11. A process for producing an optical film recited in claim 1, which comprises:

applying a coating composition on at least one side of a transparent film to form a coating layer, wherein the coating composition comprises a curable resin-precursor, a thermoplastic resin, andametal oxide fine particle having an average primary particle size of 1 to 100 nm;
drying the coating layer; and then
curing the curable resin-precursor of the dried coating layer by irradiating the dried layer with an active energy ray.

12. A process according to claim 11, wherein the coating composition is substantially free from a flocculating agent.

Fig. 1

200μm

Fig. 2

200μm

## INTERNATIONAL SEARCH REPORT

| | International application No. |
|---|---|
| | PCT/JP2011/053773 |

**A. CLASSIFICATION OF SUBJECT MATTER**
*G02B1/10*(2006.01)i, *B32B7/02*(2006.01)i, *B32B27/18*(2006.01)i, *G02B1/11*
(2006.01)i, *G02F1/1335*(2006.01)i

According to International Patent Classification (IPC) or to both national classification and IPC

**B. FIELDS SEARCHED**

Minimum documentation searched (classification system followed by classification symbols)
G02B1/10, B32B7/02, B32B27/18, G02B1/11, G02F1/1335

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-154758 A (Dainippon Printing Co.,<br>Ltd.),<br>15 June 2006 (15.06.2006),<br>claims 1 to 4; paragraphs [0016] to [0033]<br>& US 2006/0152713 A1  & KR 10-0051779 A | 1-3,5,6,8-12<br>4,7 |
| Y | JP 2004-42653 A (Nitto Denko Corp.),<br>12 February 2004 (12.02.2004),<br>claims 1 to 5; paragraphs [0040], [0045]<br>(Family: none) | 4,7 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 May, 2011 (25.05.11) | 07 June, 2011 (07.06.11) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009265143 A
- JP 2001100006 A
- JP 2008058723 A
- JP 2001233611 A
- JP 2003192994 A